Europäisches Patentamt

(19) European Patent Office

Office européen des brevets

(11) Publication number: 0 104 699
A1

(12) **EUROPEAN PATENT APPLICATION**

(21) Application number: 83201322.1

(22) Date of filing: 13.09.83

(51) Int. Cl.³: B 29 C 5/04
F 16 L 59/16

(30) Priority: 15.09.82 NL 8203578

(43) Date of publication of application:
04.04.84 Bulletin 84/14

(84) Designated Contracting States:
AT BE CH DE FR GB IT LI LU NL SE

(71) Applicant: ANIA B.V.
Krabbescheer 3
NL-4941 VW Raamsdonksveer(NL)

(72) Inventor: Van der Wiel, Willem Gerrit
Iepenlaan 120
NL-3319 VH Dordrecht(NL)

(74) Representative: van der Beek, George Frans et al,
Nederlandsch Octrooibureau Johan de Wittlaan 15 P.O.
Box 29720
NL-2502 LS Den Haag(NL)

(54) Method for fabricating an accessory of a thermally insulated conduit.

(57) Method for fabricating a pipe, an accessory such as a pipe segment, a T-piece, an elbow or an end sleeve for a thermically insulated conduit. A jacket (7,15) is located in spaced relationship around the metal or plastic medium transporting conduit section (2,17) of the respective pipe or accessory by locating said section (2,17) in a mould (4,11) the shape and dimensions of the mould cavity corresponding to the ultimate shape of the jacket (7,15). A plastic powder is passed into the space between the inner wall of the mould cavity and said conduit section (2,17) and thereafter the whole mould (4,11) is externally heated while simultaneously being rotated. Finally the void between the conduit section (2,17) and the jacket (7,15) is filled with an insulating foam material (9,16).

fig-1

Method for fabricating an accessory of a thermically insulated conduit.

The invention relates to a method for fabricating a pipe, an accessory such as a pipe segment, a T-piece, an elbow or an end sleeve for a thermically insulated conduit, according to which method a jacket is located in spaced relationship around the metal or plastic medium transporting conduit section of the respective pipe or accessory, and the void between the conduit section and the jacket is filled with an insulating foam material after closing the free ends of said jacket.

Such a method is generally known.

It is for instance known to make up such a jacket out of components which are cut off from a high or medium pressure polyethylene, which components are suitably profiled or bevelled at the surfaces which have to be connected to each other and thereafter these surfaces are welded together. For making up elbows it is for instance known to cut off the components under an angle with respect to the central axis of the tube such that a multi-angular elbow can be made as a jacket around the metal pipe, after which the jacket, realised in this way is filled with a foam material. This known method has however the disadvantage that the jacket can become disrupted at the location of the welded connections whereafter because of penetrating moist the insulation will lose its insulating properties. That applies especially to district heating conduits, which are exposed to the influence of ground-water.

It is furthermore known to bend a tubular jacket of high pressure polyethylene according to the shape of the elbow. If such a bended jacket-piece however is not installed within a short time period by installing the jacket around the metal pipe elbow and filling the intermediate space with a foam material, then said jacket-piece shows the tendency to bend back from the bended shape into the original linear shape rendering it useless.

Furthermore said method has the disadvantage that metal pipe elbows which are connected and have to be connected to linear pipe sections cannot be inserted into said bended jacket-piece.

With respect to other accessories, such as T-pieces, corner pieces, S-bends etcetera, one is usually forced to use the afore mentioned method, in which the jacket is made out of components with the disadvantages thereof.

An object of the invention is now to provide a method offering a simple solution for all these disadvantages, whereby each accessory irrespective of the complexity of his shape can be fabricated without the disadvantages of the known method and without the necessity to weld further conduit segments to the metal conduit because otherwise the conduit would not fit into the prefabricated jacket.

According to said object the invention now offers a method in which the metal or plastic conduit section is located in a mould, the shape and dimensions of the mould cavity corresponding to the ultimate shape of the jacket, a plastic powder is passed into the space between the inner wall of the mould cavity and the conduit section and thereafter the whole mould is externally heated while simultaneously being rotated. By rotating and heating the powder filled mould a plastic layer is deposited very fast onto the heated thin walled metal mould, which layer forms the jacket. On itself it is known that in this way complicated plastic objects, for instance of medium pressure polyethylene can be fabricated in a mould. Because according to the invention the steel conduit section is present into the mould during the formation of the jacket, which steel conduit part does not serve as core, one obtains after finishing the formation process a steel conduit section loosely surrounded by a plastic jacket. The void between said jacket and the steel conduit section can be filled with foam material in a known way whereby the closing end sections or transversal walls which are automatically formed in the moulding process and are extending up to the steel conduit section have during the filling process the advantage that no additional end cover walls are necessary during the foam filling process.

The invention will now be explained in more detail with reference to the drawings.

Figure 1 illustrates an upper view of an elbow in a stage of the method.

Figure 2 illustrates the elbow as product of the method illustrated in figure 1.

Figure 3 illustrates the application of the method with a T-piece.

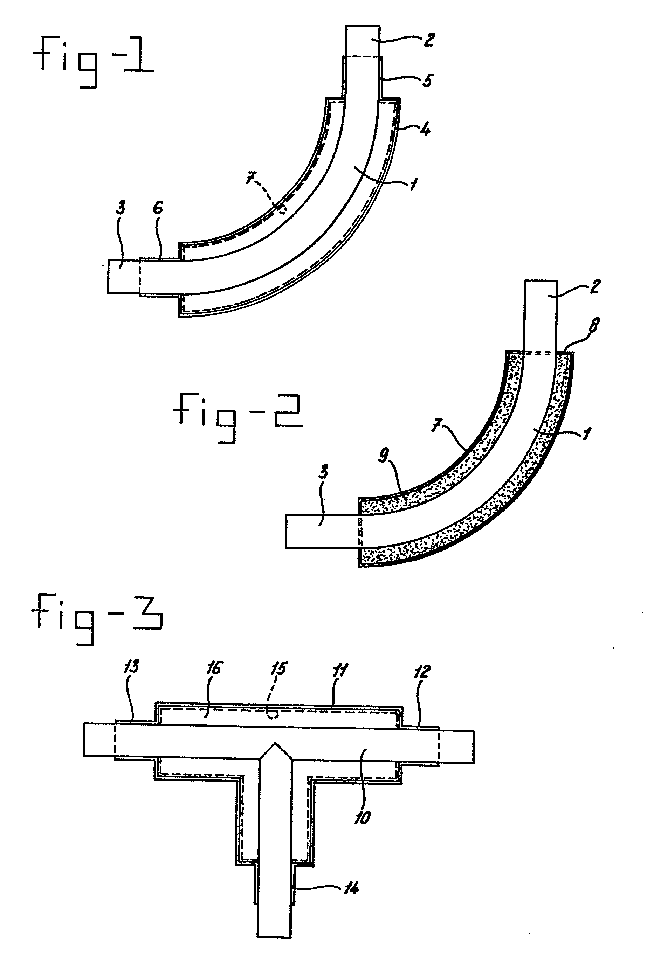

Figure 1 shows an elbow 1 comprising a steel tube which is bend over 90° and has two rectangular end sections 2 respectively 3. This elbow is located into a mould 4 comprising of two half shells of which only the lower half shell is illustrated. Both half shells have cylindrical extensions 5 respectively 6 which are clamped around the cylindrical tube segments 2 and 3 to maintain the elbow 1 centered within the mould. The upper half shell is shaped corresponding to the illustrated lower half shell 4.

After the mould is closed by connecting both half shells onto each other and after passing a thermo setting plastic powder into the shape, said powder will when the mould is rotating, be distributed onto the walls of the mould and if said walls are externally heated, then a plastic layer will become deposited onto the inner wall which layer after hardening forms the jacket. The rotation during this process is preferably a tumbling movement to distribute the plastic powder as equal as possible. This formation process itself is however known and machines for carrying out this formation process comprising heating means are commercially available.

In figure 1 the plastic layer is indicated by the dashed line 7.

After finishing the formation process and after opening the mould the product illustrated in figure 2 comprising the tube 1 and the formed jacket 7 comes out of the mould 4. Said jacket has inwards extending edges 8, closing to the tube 1. It is now possible to pass in a known way a plastic foam material in the hollow space 9 so that a thermically insulated elbow is obtained.

Figure 3 shows a T-piece 10 made of steel and a half mould shell 11, surrounding the T-piece in a spaced relationship, which half shell has the half cylindrical supporting surfaces 12, 13

0104699

and 14 for centering the steel T-piece 10. After closing and filling the mould 11 with plastic powder and by rotating and heating a plastic jacket 15 is formed and after removal from the mould a foam filling 16 can be passed into the remaining hollow space.

Using the method according to the invention a large variety of accessories can be thermically insulated in a simple and efficient way by means of a jacket which does not disrupt and surrounds the conduit with a uniform thickness.

———————

5

# C L A I M

Method for fabricating a pipe, an accessory such as a pipe segment, a T-piece, an elbow or an end sleeve for a thermically insulated conduit, according to which method a jacket is located in spaced relationship around the metal or plastic medium transporting conduit section of the respective pipe or accessory and the void between the conduit section and the jacket is filled with an insulating foam material after closing the free ends of said jacket, <u>characterized</u> <u>in</u> <u>that</u> the metal or plastic conduit section is located in a mould, the shape and dimensions of the mould cavity corresponding to the ultimate shape of the jacket, a plastic powder is passed into the space between the inner wall of the mould cavity and said conduit section and thereafter the whole mould is externally heated while simultaneously being rotated.

------

0104699

fig-1

fig-2

fig-3

0104699

European Patent Office

**EUROPEAN SEARCH REPORT**

Application number

EP 83 20 1322

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-2 012 775 (LEMELSON) <br> * Page 2, line 33 - page 3, line 9; claim 4; figures 2,3 * <br> --- | 1 | B 29 C 5/04 <br> F 16 L 59/16 |
| A | GB-A-1 426 723 (AXSTANE) <br> * Page 2, lines 28-82; figure 3 * <br> --- | 1 | |
| A | NL-A-7 106 831 (V.D. BOSSCHE) <br> * Claim 3 * <br> --- | 1 | |
| A | NL-A-6 707 349 (HOECHST) <br> --- | | |
| A | DE-A-2 211 131 (SCHMERSAL) <br> ----- | | |

| | TECHNICAL FIELDS SEARCHED (Int. Cl. ³) |
|---|---|
| | B 29 C <br> B 29 D <br> F 16 L |

The present search report has been drawn up for all claims

| Place of search <br> THE HAGUE | Date of completion of the search <br> 02-01-1984 | Examiner <br> WELSCH H.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82